# EUROPÄISCHE PATENTSCHRIFT

(11) **EP 1 604 853 B1**
(45) Veröffentlichungstag und Bekanntmachung des Hinweises auf die Patenterteilung: **11.06.2008**
(21) Anmeldenummer: 05011293.7
(22) Anmeldetag: 25.05.2005
(51) Int. Cl.: B60K 6/42

(54) **Antriebssystem für eine mobile Arbeitsmaschine, insbesondere ein Flurförderzeug**
Drive unit for working vehicle, especially for floor conveyor
Unité d'entraînement pour une machine de travail, notamment pour un chariot de manutention

(30) Priorität: 12.06.2004 DE 102004028620
(43) Veröffentlichungstag der Anmeldung: 14.12.2005
(73) Patentinhaber: Jungheinrich Aktiengesellschaft, 22047 Hamburg (DE)
(72) Erfinder: Baginski, Ralf, Dipl.-Ing., 21398 Neetze (DE); Bruns, Rainer, Prof. Dipl.-Ing., 22395 Hamburg (DE); Nissen, Nis-Georg, Dipl.-Ing., 24616 Brokstedt (DE); Steiger, Stefan, Dipl.-Ing., 64407 Fränkisch-Grumbach (DE)
(74) Vertreter: Hauck Patent- und Rechtsanwälte

(56) Entgegenhaltungen:
- DE-A1- 19 822 528
- DE-A1- 19 955 312
- DE-C1- 19 729 033

## Beschreibung

Die Erfindung bezieht sich auf ein Antriebssystem für eine mobile Arbeitsmaschine, insbesondere ein Flurförderzeug, mit den Merkmalen des Patentanspruchs 1.

Verbrennungsmotorisch angetriebene Flurförderzeuge erfordern ein Getriebe, um das gewünschte Drehmoment mit der gewünschten Drehzahl zur Verfügung zu stellen. Es ist erwünscht, daß das Flurförderzeug vorwärts und rückwärts mit gleich großer Maximalgeschwindigkeit gefahren werden kann.

Es ist bei Kraftfahrzeugen bekannt, eine Kupplung und einen hydrokinetischen Wandler in Kombination mit ein- oder mehrstufigen Getrieben zu verwenden. Für Flurförderzeuge ist jedoch ein derartiges System nur eingeschränkt geeignet, weil es bei langsamen Fahrgeschwindigkeiten einen kleinen Wirkungsgrad aufweist. Außerdem ist für die unabhängige Bedienung der Hubfunktion des Flurförderzeugs eine Kupplungsfunktion erforderlich.

Die Nachteile eines hydrodynamischen Getriebesystems finden sich bei einem hydrostatischen Antriebsstrang nicht. Er verfügt über einen stufenlosen Wandlungsbereich und ermöglicht einen einfachen Reversierbetrieb. Dem relativ hohen Wirkungsgrad bei langsamer Fahrt steht jedoch der schlechte Wirkungsgrad bei höheren Fahrgeschwindigkeiten gegenüber. Bedingt durch die mehrfache hydraulisch-mechanische Wandlung der gesamten Antriebsleistung wird der Wirkungsgrad eines mechanischen Schaltgetriebes nicht erreicht. Nachteilig sind ferner der relativ hohe Bauaufwand, bedingt durch die hohen Hydraulikdrücke bis zu 400 bar, und die Fehleranfälligkeit des Systems, insbesondere im Hinblick auf Leckagen.

Schließlich ist auch im Flurförderzeug bekannt, die Kraftübertragung mit Hilfe eines elektrischen Getriebes vorzunehmen. Bei einem elektrischen Getriebe wird die gesamte vom Verbrennungsmotor erzeugte Energie mit Hilfe eines Generators in elektrische Energie umgewandelt. Die elektrische Energie wird mit Hilfe eines Elektromotors wieder in mechanische Energie umgewandelt. Innerhalb vorgegebener Grenzen ermöglichen Antriebssteuerungen für Elektromaschinen beliebige Übersetzungen zwischen Generator und Elektromotor. Daher hat ein derartiges System den Vorteil der besonders guten Regelbarkeit. Nachteilig sind jedoch die niedrigen Wirkungsgrade, bedingt durch die hohen Verluste in den Steuerungen und elektrischen Maschinen.

Die derzeitigen Antriebslösungen bei verbrennungsmotorisch betriebenen Flurförderzeugen sind in der Regel mit erheblichen Energieverlusten in bestimmten Betriebssituationen verbunden. Außerdem sind sie nicht in der Lage, beim Bremsen oder Lastabsenken Energie in einen Speicher zurückzuführen. Es ist auch kein emissionsfreier Betrieb möglich, was den Einsatz derartiger Flurförderzeuge in geschlossenen Räumen nahezu ausschließt. Ein weiterer Nachteil der bisherigen Antriebssysteme liegt darin, daß die Komponenten auf Spitzenlasten ausgelegt werden müssen, während die mittlere Belastung der Komponenten deutlich darunter liegt. Somit wird ein hoher Bauaufwand betrieben, der im Mittel nicht benötigt wird.

Die DE 199 55 312 A zeigt ein Antriebssystem für eine Arbeitsmaschine, insbesondere ein Flurförderzeug, mit
einem Verbrennungsmotor,
einem Verzweigungsgetriebe, dessen erste Welle mit dem Verbrennungsmotor, dessen zweite Welle mit einem Umschaltgetriebe gekoppelt ist, dessen Ausgang über ein Sammelgetriebe auf die angetriebenen Räder des Flurförderzeugs wirkt,
einem elektrischen Getriebe, von dem eine erste Elektromaschine drehmomentenmäßig mit dem Verzweigungsgetriebe zusammenwirkt, und eine zweite Elektromaschine über mindestens ein Sammelgetriebe mit den angetriebenen Rädern gekoppelt ist.

Aus DE 198 15 780 ist ein stufenlos wirkendes hydrostatisch-mechanisches Lastschaltgetriebe für Flurförderzeuge bekannt geworden, das ein stufenloses hydrostatisches Anfahren oder Reversieren mit reduziertem Bauaufwand erreichen soll. Das bekannte Getriebe hat mehrere Schaltkupplungen sowie Zahnräder-Nachschaltstufen. Das Antriebssystem kann nicht emissionsfrei betrieben werden, und die kinetische Energie beim Bremsen und beim Lastabsenken kann nicht zurückgewonnen werden. Das rein hydrostatische Anfahren führt bis zum Umschalten in den leistungsverzweigenden Betrieb zu einem schlechten Getriebewirkungsgrad. Außerdem ist keine Rückwärtsfahrt mit maximaler Geschwindigkeit möglich.

Aus DE 197 47 459 ist ein hydrostatisch-mechanischer Fahrantrieb für Flurförderzeuge bekannt geworden, der die Vorteile eines hydrostatischen Antriebs und eines mechanischen Antriebs in Kombination ausnutzen soll, indem der Gesamtwirkungsgrad des Getriebes über den mechanischen Zweig erhöht wird. Ein solches Antriebssystem kann so ausgelegt werden, daß eine Vorzugsfahrrichtung mit gutem Getriebewirkungsgrad vom Stillstand bis Maximalgeschwindigkeit gefahren werden kann. In der anderen Fahrrichtung ist der Wirkungsgrad im Bereich der Maximalgeschwindigkeit klein. Das Antriebssystem kann nicht emissionsfrei betrieben werden und es ist auch nicht möglich, Brems- und Lastsenkenergie zurückzugewinnen.

Aus DE 198 03 160 ist ein Verzweigungsgetriebe und ein Verfahren zum Betrieb bekannt geworden, welches das Wirkungsgradverhalten verbessern und die Lebensdauer des Antriebssystems erhöhen soll. Dazu soll bei Überschreitung einer Wellengrenzdrehzahl eine abhängig vom Fahrbetriebszustand des Kraftfahrzeugs steuerbare Rotationsbremse eine Welle vorübergehend oder dauerhaft stillsetzen. Das Antriebssystem, das nicht für Flurförderzeuge gedacht ist, kann nicht emissionsfrei betrieben werden und es ist auch keine Rückgewinnung der Brems- und Lastenergie möglich. Außerdem ist eine Rückwärtsfahrt mit maximaler Geschwindigkeit ebenfalls nicht erreichbar.

Aus DE 199 55 311, DE 199 55 312 und DE 199 55 313 sind verbrennungsmotorische Antriebssysteme für Flurförderzeuge bekannt geworden, bei denen eine Verbrennungskraftmaschine und mindestens eine Elektromaschine die Antriebsenergie erzeugen. Die bekannten Antriebssysteme besitzen mindestens ein Sammelgetriebe zum Zusammenführen der Energie des Verbrennungsmotors und der Elektromaschine. Damit sollen die Fahrleistung insgesamt verbessert, eine stufenlose gute Regelbarkeit ermöglicht und eine Erhöhung des Gesamtwirkungsgrades bewirkt werden. Die bekannten Antriebssysteme benötigen mechanische Fahrbetriebsbremsen, um die geforderte Mindestabbremsung auch bei Maximalgeschwindigkeit und ohne überdimensionierte Elektromaschinen zu erreichen. Die Verbrennungsmotoren bei den bekannten Antriebssystemen sind starr mit dem nachgeordneten Getriebesystem verbunden, so daß der Verbrennungsmotor im emissionsfreien elektrischen Betrieb verlustbehaftet mitgeschleppt wird.

Der Erfindung liegt die Aufgabe zugrunde, ein verbrennungsmotorisches, zweisträngiges Antriebssystem für Flurförderzeuge zu schaffen, das emissionsfrei betrieben werden kann, eine Wiedergewinnung von Brems- und Lastsenkenergie ermöglicht und insbesondere auf mechanische Fahrbetriebsbremsen verzichten kann.

Diese Aufgabe wird durch die Merkmale des Patentanspruchs 1 gelöst.

Bei dem erfindungsgemäßen Antriebssystem ist der Verbrennungsmotor mit einem Verzweigungsgetriebe gekoppelt, dessen eine Ausgangswelle mit einem Umschaltgetriebe gekoppelt ist, das seinerseits mit einem Sammelgetriebe gekoppelt ist für das Aufbringen des Drehmoments auf mindestens eines der angetriebenen Räder des Flurförderzeugs. Der zweite Antriebsstrang wird von mindestens zwei Elektromaschinen gebildet, von denen eine mit dem Verzweigungsgetriebe so gekoppelt ist, daß zwischen der Elektromaschine und mindestens einer der ersten oder zweiten Welle des Verzweigungsgetriebes ein konstantes Momentenverhältnis hergestellt wird. Erste und zweite Elektromaschine sind über eine elektrische Schaltungsanordnung gekoppelt, welche ihrerseits mit einem elektrischen Speicher verbunden ist, z. B. einer Batterie. Durch Ansteuerung der Schaltungsanordnung kann das Übersetzungsverhältnis zwischen den Elektromaschinen in Grenzen beliebig eingestellt werden. Erfindungsgemäß sind zwei mechanisch-hydraulische Wandler, z. B. Hydraulikpumpen, vorgesehen, von denen einer mit der ersten oder zweiten Welle des Verzweigungsgetriebes und der zweite mit dem elektrischen Getriebe gekoppelt ist. Die mechanisch-hydraulischen Wandler können zur Versorgung von Hydraulikfunktionen des Flurförderzeugs herangezogen werden. Ihnen ist auch jeweils ein steuerbares Mittel zugeordnet zum Verzehr von nicht benötigter hydraulischer Energie, z. B. in Form einer Drossel.

Bei dem erfindungsgemäßen Antriebssystem für Flurförderzeuge ist ein zweisträngiges System vorgesehen, bei dem der eine Strang mechanisch zwischen Verbrennungsmotor und Abtriebswelle angeordnet ist, während in dem anderen Strang ein elektrisches Verstellgetriebe angeordnet ist. Dem elektrischen Verstellgetriebe über das Verzweigungsgetriebe zugeführte mechanische Energie wird mit Hilfe des Generatorbetriebes der ersten elektrischen Maschine in elektrische Energie umgewandelt. Die elektrische Energie wird mit Hilfe der zweiten elektrischen Maschine in Form eines elektromotorischen Betriebs in mechanische Energie umgewandelt. Bekannte Antriebssteuerungen für Elektromaschinen sind in der Lage, innerhalb der durch die elektrischen Maschinen vorgegebenen Grenzen beliebige Übersetzungen zwischen Generator und Elektromotor einzustellen.

Beim Beschleunigen des Verbrennungsmotors wird im Verzweigungsgetriebe die Antriebsleistung des Verbrennungsmotors abhängig von den Drehzahlverhältnissen der Wellen des Verzweigungsgetriebes auf die beiden Stränge aufgeteilt, wobei sich die Richtung des Leistungsflusses aus der Größe der Drehzahlen der Wellen ergibt. In dem elektrischen Getriebe wird das Übersetzungsverhältnis stufenlos verstellt, und der dem elektrischen Getriebe zugeordnete Speicher (Batterie) kann dem Antriebssystem bei Bedarf Energie entnehmen oder diesem Energie zuführen.

In einem Sammelgetriebe wird die Leistung der beiden Stränge aufsummiert, wobei sich die Richtung des Leistungsflusses aus der Größe der Momente der Wellen ergibt. Um den Gesamtwirkungsgrad des Antriebssystems unabhängig vom Fahrbetriebszustand zu erhöhen, kann die Welle des Verbrennungsmotors drehzahlfest mit der Welle des Hauptstranges gekoppelt werden.

Um zumindest vorübergehend emissionsfrei und mit guten Wirkungsgraden in geschlossenen Räumen fahren zu können, ist es möglich, den Verbrennungsmotor gemäß einer Ausgestaltung der Erfindung vom restlichen Antriebssystem mechanisch zu entkoppeln, insbesondere durch eine schaltbare Kupplung. Die für die Fahr- und Hubfunktion des Flurförderzeugs notwendige Energie wird in diesem Betriebszustand aus dem dem elektrischen Getriebe zugeordneten Speicher entnommen.

Beim Abbremsen wird ein Teil der kinetischen Energie des Flurförderzeugs durch die elektrischen Maschinen aus dem Antriebssystem genommen und in den Speicher nutzbar eingespeichert. Die restliche Energie wird von dem geschleppten Verbrennungsmotor und den beiden mechanisch-hydraulischen Wandlern aufgenommen. Sie kann z.B. von hydraulischen Nebenverbrauchern (Hubfunktion, Neigefunktion usw.) genutzt werden. Besteht kein Leistungsbedarf bei Nebenverbrauchern, wird die hydraulische Leistung durch geeignete Mittel dissipiert, etwa durch steuerbare Drosseln. Die Vernichtung von Bremsenergie für ein Antriebssystem für ein Flurförderzeug ist aus EP 1403130 A2 bekannt.

Zur Änderung der Drehrichtung der Räder bei verbrennungsmotorischem Betrieb kann mit Hilfe eines Umschaltgetriebes im Hauptzweig zwischen Vorwärts- und Rückwärtsfahrt umgeschaltet werden.

Wie schon erwähnt, werden die hydraulischen Nebenverbraucher durch mindestens einen der mechanisch-hydraulischen Wandler versorgt. Die mechanisch-hydraulischen Wandler können je nach Betriebszustand aus mechanischer Energie hydraulische Energie oder aus hydraulischer Energie mechanische Energie gewinnen. Die dem Antriebssystem beim Absenken einer Last zugeführte Energie kann über die Elektromaschinen in den Speicher zurückgeführt werden.

Die Erfindung soll nachfolgend anhand von in Zeichnungen dargestellten Ausführungsbeispielen näher erläutert werden.
- Fig. 1: zeigt schematisch eine erste Ausführungsform eines Antriebssystems nach der Erfindung.
- Fig. 2: zeigt schematisch eine zweite Ausführungsform nach der Erfindung.

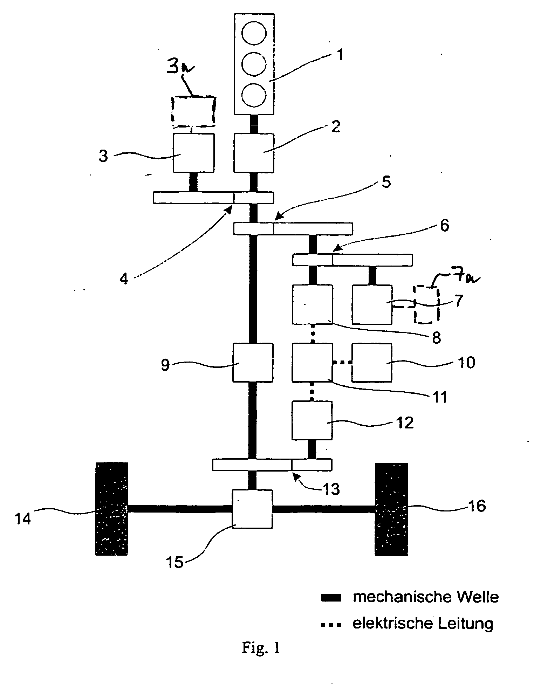

In Fig. 1 ist ein Verbrennungsmotor 1 eines nicht weiter dargestellten Flurförderzeugs über eine Welle und eine schaltbare Kupplung 2 mit einem Verzweigungsgetriebe 5 verbunden, das z.B. ein Drei-Wellen-Umlaufgetriebe oder ein Planetengetriebe ist. Das Verzweigungsgetriebe 5 teilt die Leistung des Verbrennungsmotors 1 abhängig von den Drehzahlverhältnissen der Wellen des Verzweigungsgetriebes 5 auf zwei Stränge auf. Im mechanischen Hauptstrang ist ein Umschaltgetriebe 9 integriert, um zwischen Vorwärts- und Rückwärtsfahrt umschalten zu können. In den Nebenzweig ist ein elektrisches Verstellgetriebe integriert, in Form einer ersten elektrischen Maschine 8, einer zweiten elektrischen Maschine 12 und einer zwischen den elektrischen Maschinen angeordneten elektrischen Schaltungsordnung 11. Mit Hilfe dieser Teile kann das Übersetzungsverhältnis im Nebenstrang stufenlos verstellt werden. Eine Batterie 10 ist mit der Schaltungsanordnung 11 verbunden und kann dem System Energie entnehmen oder diesem zuführen.

Haupt- und Nebenstrang sind mit einem Sammelgetriebe 13 gekoppelt zur Aufsummierung der Leistungen beider Stränge. Ein Differentialgetriebe 15 teilt die Antriebsleistung aus dem Sammelgetriebe 13 auf zwei Antriebsräder 14, 16 auf.

Über ein Stirnradgetriebe 4 zwischen Kupplung 2 und Verzweigungsgetriebe 5 ist ein erster mechanisch-hydraulischer Wandler 3, z.B. eine Hydraulikpumpe, angekoppelt. Ein zweiter mechanisch-hydraulischer Wandler 7 ist über ein Stirnradgetriebe 6 mit einer Welle zwischen Verzweigungsgetriebe 5 und erster Elektromaschine 8 gekoppelt.

Ist ein emissionsfreier Betrieb mit gutem Wirkungsgrad gewünscht, wird der Verbrennungsmotor 1 über die Kupplung 2 vom Antriebssystem und dem Umschaltgetriebe 9 entkoppelt. Der Antrieb erfolgt ausschließlich über den Nebenstrang mit den Elektromaschinen 8, 12, wobei ihre Versorgung über die Batterie 10 erfolgt. Die hydraulischen Funktionen des nicht gezeigten Flurförderzeugs werden von mindestens einem der Wandler 3, 7 versorgt, wobei die Energiezufuhr in diesem Betriebszustand ebenfalls aus dem Speicher 10 erfolgt.

Beim Bremsen des Fahrzeugs werden die mechanisch-hydraulischen Wandler 3, 7 angetrieben. Sie können daher Bremsenergie entweder dadurch aufnehmen, daß sie hydraulische Nebenfunktionen versorgen oder auch dadurch, daß hydraulische Energie z.B. über Drosseln vernichtet wird, wenn hydraulische Energie von den Verbrauchern nicht abgefordert wird. Dies ist durch hydraulisch-thermische Energiewandler 3a, 7a angedeutet, die den Wandlern 3, 7 zugeordnet sind und angesteuert werden können (was nicht gezeigt ist). Im übrigen erfolgt über die Antriebsräder ein Mitschleppen des Verbrennungsmotors 1, wenn dieser nicht vom Antriebssystem entkoppelt ist und ein Antrieb der Elektromaschinen 12 und 8 im Generatorbetrieb, wodurch Bremsenergie in den Speicher 10 zurückgeführt wird. Beim Lastsenken erzeugte hydraulische Energie wird über mindestens einen der Wandler 3, 7 und durch die Elektromaschine ebenfalls in elektrische Energie umgewandelt und der Batterie 10 zugeführt.

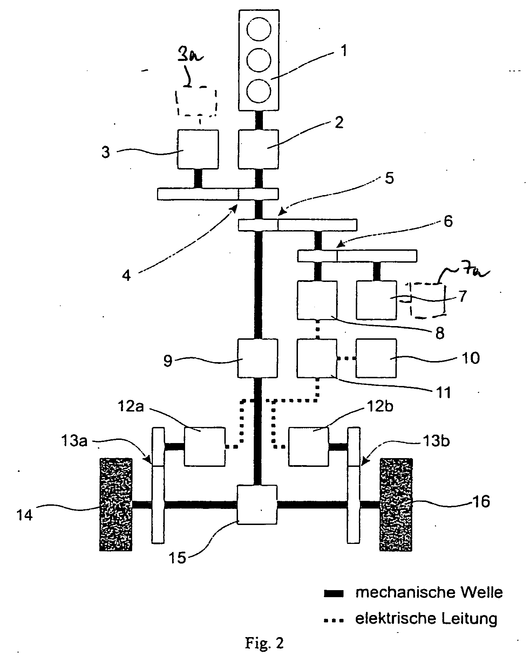

Die Ausführungsform nach Fig. 2 unterscheidet sich von der nach Fig. 1 dadurch, daß statt der Elektromaschine 12 in Fig. 1 zwei Elektromaschinen 12a, 12b vorgesehen sind, die über jeweils ein eigenes Sammelgetriebe 13a, 13b mit der Antriebswelle gekoppelt sind. Ein Flurförderzeug, bei dem die Drehzahlen beider Elektromaschinen 12a, 12b geregelt werden kann, kann so enge Kurven fahren, daß der Drehpunkt zwischen den Antriebsrädern 14, 16 liegt. Dies hat den Vorteil, daß durch die erhöhte Manövrierbarkeit ein geringerer Bedarf an Arbeitsraum besteht und so schmalere Gänge in einem Lager vorgesehen werden können. Außerdem kann durch regelungstechnische Eingriffe in die Dynamik der Elektromaschinen 12a, 12b die Fahrdynamik des Flurförderzeugs positiv beeinflußt werden. Dadurch werden Voraussetzungen geschaffen, um mit Hilfe einer elektronischen Steuerung die Fahrstabilität und damit die Arbeitssicherheit des Flurförderzeugs zu erhöhen.

## Patentansprüche

1. Antriebssystem für eine Arbeitsmaschine, insbesondere ein Flurförderzeug, mit
einem Verbrennungsmotor (1),
einem Verzweigungsgetriebe (5), dessen erste Welle mit dem Verbrennungsmotor (1), dessen zweite Welle mit einem Umschaltgetriebe (9) gekoppelt ist, dessen Ausgang über ein Sammelgetriebe (13, 13a, 13b) auf die angetriebenen Räder (14, 16) des Flurförderzeugs wirkt,
einem elektrischen Getriebe, von dem eine erste Elektromaschine (8) drehmomentenmäßig mit dem Verzweigungsgetriebe (5) zusammenwirkt, und
eine zweite Elektromaschine (12, 12a, 12b) über mindestens ein Sammelgetriebe (13, 13a, 13b) mit den angetriebenen Rädern (14, 16) gekoppelt ist, wobei das Verzweigungsgetriebe (5) zwischen der ersten Elektromaschine (8) und mindestens der ersten und zweiten Welle ein konstantes Momentenverhältnis herstellt und wobei eine elektrische Schaltungsanordnung (11) die elektrischen Maschinen (8 bzw. 12, 12a, 12b) elektrisch koppelt und mit einem elektrischen Speicher verbunden ist,
zwei mechanisch-hydraulische Wandlern (3, 7), von denen einer mit der ersten oder zweiten Welle des Verzweigungsgetriebes (5) und der zweite mit dem elektrischen Getriebe gekoppelt ist, und
steuerbaren Mitteln zum Verzehr hydraulischer Energie, die jedem mechanisch-hydraulischen Wandler (3, 7) zugeordnet sind.

2. Antriebssystem nach Anspruch 1, **dadurch gekennzeichnet, daß** den mechanisch-hydraulischen Wandlern (3, 7) steuerbare Drosseln zugeordnet sind.

3. Antriebssystem nach Anspruch 1 oder 2, **dadurch gekennzeichnet, daß** der Verbrennungsmotor (1) über eine schaltbare Kupplung (2) mit der Eingangswelle des Verzweigungsgetriebes (5) gekoppelt ist.

4. Antriebssystem nach einem der Ansprüche 1 bis 3, **dadurch gekennzeichnet, daß** die elektrische Schaltungsanordnung (11) so ausgeführt ist, daß die elektrische Energie mindestens einer der Elektromaschinen (8, 12, 12a, 12b) im Generatorbetrieb in den Speicher (10) einspeisbar ist.

5. Antriebssystem nach einem der Ansprüche 1 bis 4, **dadurch gekennzeichnet, daß** mindestens einer der mechanisch-hydraulischen Wandler über Steuermittel mit Hydraulikverbrauchern des Flurförderzeugs verbindbar ist.

6. Antriebssystem nach einem der Ansprüche 1 bis 5, **dadurch gekennzeichnet, daß** das elektronische Getriebe drei Elektromaschinen (8, 12, 12a, 12b) aufweist, von denen zwei (12a, 12b) parallelgeschaltet sind und jeweils über ein Sammelgetriebe (13a, 13b) auf ein Antriebsrad (14, 16) wirken.

7. Antriebssystem nach einem der Ansprüche 1 bis 6, **dadurch gekennzeichnet, daß** das Verzweigungsgetriebe (5) ein Drei-Wellen-Umlaufgetriebe ist.

8. Antriebssystem nach Anspruch 7, **dadurch gekennzeichnet, daß** ein Planetengetriebe vorgesehen ist.

## Claims

1. Driving system for a machine, in particular an industrial truck with
a combustion engine (1),
a two-branch gear transmission (5) whose first shaft is coupled to the combustion engine (1), whose second shaft is coupled to a change-over transmission (9), whose outlet acts on the driven wheels (14, 16) of the industrial truck via a collecting transmission (13, 13a, 13b),
an electric transmission of which a first electric machine (8) cooperates therewith, with respect to the torque, by means of the two-branch gear transmission (5), and a second electric machine (12, 12a, 12b) is coupled via at least one collecting transmission (13, 13a, 13b) to the driven wheels (14, 16), the two-branch gear transmission (5) producing a constant torque ratio between the first electric machine (8) and at least the first and second shaft and an electrical circuit arrangement (11) electrically coupling the electric machines (8 or 12, 12a, 12b) and being connected to an electric accumulator,
two mechanical hydraulic converters (3, 7) of which one is coupled to the first or second shaft of the two-branch gear transmission (5) and the second to the electric transmission, and
controllable means for the absorption of hydraulic energy which are associated with each mechanical hydraulic converter (3, 7).

2. Driving system according to claim 1, **characterised in that** controllable throttles are associated with the mechanical-hydraulic converters (3, 7).

3. Driving system according to claim 1 or 2, **characterised in that** the combustion engine (1) is coupled to the input shaft of the two-branch gear transmission (5) via a clutch (2).

4. Driving system according to any one of claims 1 to 3, **characterised in that** the electrical circuit arrangement (11) is designed such that the electrical energy of at least one of the electric machines (8, 12, 12a, 12b) operating as a generator can be stored in the accumulator (10).

5. Driving system according to any one of claims 1 to 4, **characterised in that** at least one of the mechanical- hydraulic converters can be connected to hydraulic consumer applications of the industrial truck via control means.

6. Driving system according to any one of claims 1 to 5, **characterised in that** the electronic transmission comprises three electric machines (8, 12, 12a, 12b) of which two (12a, 12b) are connected in parallel and act on a drive wheel (14, 16) respectively via a collecting gear transmission (13a, 13b).

7. Driving system according to any one of claims 1 to 6, **characterised in that** the two-branch gear transmission (5) is a three shaft planetary transmission.

8. Driving system according to claim 7, **characterised in that** a planetary gear system is provided.

## Revendications

1. Unité d'entraînement pour une machine de travail, en particulier un chariot de manutention, comprenant
un moteur thermique (1),
une transmission de jonction (5), dont le premier arbre est couplé au moteur thermique (1), dont le second arbre est couplé à un correcteur de rapport (9), dont la sortie agit via une transmission collective (13, 13a, 13b) sur les roues motrices (14, 16) du chariot de manutention,
une transmission électrique, par laquelle une première machine électrique (8) coopère avec la transmission de jonction (5) proportionnellement au couple, et une seconde machine électrique (12, 12a, 12b), via au moins une transmission collective (13, 13a, 13b), est couplée aux roues motrices (14, 16), la transmission de jonction (5) créant entre la première machine électrique (8) et au moins le premier et le second arbres un rapport de couple constant, et un dispositif de commutation électrique (11) couplant électriquement les machines électriques (8 et/ou 12, 12a, 12b) et étant relié à un dispositif de stockage électrique,
deux convertisseurs hydromécaniques (3, 7) dont un est couplé au premier ou au second arbre de la transmission de jonction (5), et dont le second est couplé à la transmission électrique, et
des moyens réglables pour la consommation d'énergie hydraulique, lesquels sont associés à chaque convertisseur hydromécanique (3, 7).

2. Unité d'entraînement selon la revendication 1, **caractérisée en ce que** des étranglements réglables sont associés aux convertisseurs hydromécaniques (3, 7).

3. Unité d'entraînement selon la revendication 1 ou 2, **caractérisée en ce que** le moteur thermique (1) est couplé via un accouplement embrayable (2) à l'arbre d'entrée de la transmission de jonction (5).

4. Unité d'entraînement selon l'une quelconque des revendications 1 à 3, **caractérisée en ce que** le dispositif de commutation électrique (11) est conçu de telle sorte que l'énergie électrique d'au moins une des machines électriques (8, 12, 12a, 12b) peut, en fonctionnement en générateurs, être stockée dans le dispositif de stockage (10).

5. Unité d'entraînement selon l'une quelconque des revendications 1 à 4, **caractérisée en ce qu'**au moins un des convertisseurs hydromécaniques peut être relié par des moyens de commande à des consommateurs hydrauliques du chariot de manutention.

6. Unité d'entraînement selon l'une quelconque des revendications 1 à 5, **caractérisée en ce que** la transmission électronique comprend trois machines électriques (8, 12, 12a, 12b), dont deux sont connectées en parallèle (12a, 12b) et agissent respectivement via une transmission collective (13a, 13b) sur une roue motrice (14, 16).

7. Unité d'entraînement selon l'une quelconque des revendications 1 à 6, **caractérisée en ce que** la transmission de jonction (5) est un engrenage planétaire à triple arbre.

8. Unité d'entraînement selon la revendication 7, **caractérisée en ce qu'**un engrenage planétaire est prévu.
